# EUROPEAN PATENT SPECIFICATION

(11) **EP 2 033 812 B1**
(45) Date of publication and mention of the grant of the patent: **22.09.2010**
(21) Application number: 08162841.4
(22) Date of filing: 22.08.2008
(51) Int. Cl.: B60C 1/00, C08K 5/13, C08L 21/00, C08L 49/00, C08L 7/00, C08L 9/00

(54) **Rubber composition and tire having component containing combination of emulsion SBR and tackifying resins**
Kautschukzusammensetzung und Reifen mit einer Komponente aus einer Kombination einer SBR-Emulsion mit klebrigmachenden Harzen
Composition en caoutchouc et pneu disposant d'un composant contenant une combinaison d'émulsion SBR et résines donnant du collant

(30) Priority: 27.08.2007 US 845127
(43) Date of publication of application: 11.03.2009
(73) Proprietor: The Goodyear Tire & Rubber Company, Akron, OH 44316-0001 (US)
(72) Inventor: SANDSTROM, Paul Harry, Cuyahoga Falls, OH 44223 (US); HOLTZAPPLE, Gregory Martin, Kent, OH 44240 (US); GULAS, Brad Stephen, Cleveland, OH 44113 (US)
(74) Representative: Kutsch, Bernd

(56) References cited:
- EP-A- 0 899 297
- EP-A- 1 514 901
- EP-A- 1 526 002
- GB-A- 1 514 283
- JP-A- 7 090 124
- US-A1- 2001 051 685

## Description

### Background of the Invention

A natural rubber-based tire sidewall composition may typically be composed of elastomers including, for example, a significant content of natural rubber (natural cis 1,4-polyisoprene) together with cis 1,4-polybutadiene rubber (a synthetic rubber).

A significant challenge is presented of replacing a significant portion of the natural rubber in such tire sidewall rubber composition.

A motivation for such challenge is a desire for a natural rubber alternative, at least a partial alternative, in a form of a synthetic rubber such as emulsion polymerization prepared styrene/butadiene rubber (which may be referred to herein as emulsion SBR or E-SBR) to offset relative availability and/or cost considerations of natural rubber.

However, replacement of a significant portion of the natural rubber in such natural rubber based tire sidewall composition is not a simple matter and requires more than routine experimentation, particularly where it is desired to provide the uncured rubber composition with suitable building tack.

Indeed, it has been observed that the presence of significant amounts of emulsion SBR in combination with only a minimal amount, or a total replacement of, natural rubber in a natural rubber based rubber composition, can significantly reduce building tack for the uncured rubber composition.

It has further been observed that an addition of alkylphenol/formaldehyde based tackifying resins to such rubber composition did not sufficiently provide suitable building tack for such uncured rubber composition.

Accordingly, for this invention, rubber compositions were evaluated, from a building tack viewpoint for the uncured rubber composition, which contained various tackifying resins, including a specific alkylphenol/acetylene tackifying resin, with a combination of cis 1,4-polybutadiene rubber, emulsion SBR and only a low level, if any, of natural rubber.

In the description of this invention, the terms "compounded" rubber compositions and "compounds", where used refer to the respective rubber compositions which have been compounded with appropriate compounding ingredients such as, for example, carbon black, oil, stearic acid, zinc oxide, silica, wax, antidegradants, resin(s), sulfur and accelerator(s) and silica and silica coupler where appropriate. The terms "rubber" and "elastomer" may be used interchangeably. The amounts of materials are usually expressed in parts of material per 100 parts of rubber polymer by weight (phr).

US-A- 2001/0051685 describes a rubber composition comprising natural rubber, polybutadiene rubber, carbon black, a t-butylphenol/acetylene tackifying resin and silica.

EP-A- 1 526 002 describes a rubber composition comprising natural rubber, polybutadiene rubber, carbon black and a butylphenol/acetylene tackifying resin.

### Disclosure and Practice of the Invention

The invention relates to an uncured rubber composition according to claim 1, an assembly according to claim 10, a sulfur cured rubber composition according to claim 12, a cured tire according to claim 13 and a cured assembly according to claim 15.

Dependent claims refer to preferred embodiments of the invention.

In accordance with one embodiment of this invention, a cured or uncured rubber composition comprises, based upon parts by weight per 100 parts by weight rubber (phr):
(A) 100 phr of diene-based elastomers comprising:
   (1) from 5 to 15 phr of cis 1,4-polyisoprene rubber comprising at least one of natural and synthetic cis 1,4-polyisoprene rubber, preferably natural rubber;
   (2) from 55 to 75 phr of cis 1,4-polybutadiene rubber,
   (3) from 10 to 30 phr of emulsion polymerization prepared styrene/butadiene rubber (E-SBR);
(B) from 3 to 10 phr of alkylphenol/acetylene tackifying resin; and
(C) from 20 to 120, alternately from 45 to 90, phr of a particulate reinforcing filler comprising:
   (1) rubber reinforcing carbon back, or
   (2) 10 to 80, alternately from 30 to 60, phr of rubber reinforcing carbon black, and up to 50, alternately from 10 to 50, alternately from 15 to 30, phr of amorphous synthetic silica, preferably precipitated silica; and
   wherein at least one surface of said rubber composition contains said alkyphenol/acetylene tackifying resin.

In practice, said alkylphenol/acetylene tackifying resin is preferably a para tertiary butylphenol/acetylene tackifying resin.

Representative of a para tertiary butylphenol/acetylene resin is, for example, Koresin from BASF.

In practice said silica is usually used in combination with a silica coupler for said silica having a moiety reactive with hydroxyl groups (e.g. silanol groups) on said silica and another different moiety interactive with said diene-based elastomer(s).

In one aspect of the invention, said particulate rubber reinforcement is rubber reinforcing carbon black.

In another aspect of the invention, said particulate rubber reinforcement comprises a combination of rubber reinforcing carbon black and amorphous silica, particularly precipitated silica.

The alkylphenol/acetylene based tackifying resin itself is not intended to include alkylphenol/formaldehyde resins, although the alkylphenol/acetylene based tackifying resin may be used together with alkylphenol/formaldehyde tackifying resins if desired and if appropriate.

The such alkylphenol/formaldehyde tackifying resins are, for example those in which the alkylphenol is para tertiary octylphenol or para tertiary butylphenol, usually the para tertiary octylphenol.

Representative of such more somewhat often used alkylphenol/formaldehyde tackifying resins is, for example, SP-1068™ from the SI Group which might be described as an unreactive para tertiary octylphenol/formaldehyde based tackifying resin.

In further accordance with this invention, a sulfur cured rubber composition is provided by sulfur curing said uncured rubber composition which contains said alkylphenol/acetylene tackifying resin on its surface.

Accordingly, a sulfur cured rubber composition is provided.

In additional accordance with this invention, said uncured tire rubber component, for example an uncured sidewall rubber component, is provided wherein at least one surface thereof contains said alkylphenol/acetylene tackifying resin.

In further accordance with this invention, an uncured rubber composition for an uncured rubber tire component, such as for example a tire rubber sidewall component, comprises said uncured rubber composition having a surface containing said alkylphenol/acetylene tackifying resin.

In additional accordance with this invention, a preferably sulfur cured rubber composition, for example a sidewall rubber component is provided by preferably sulfur curing said uncured rubber component which contains said alkylphenol/acetylene tackifying resin on its surface.

In additional accordance with this invention, an assembly of uncured rubber tire components is provided which contains said uncured rubber component, for example said tire sidewall rubber component, wherein said uncured rubber component (e.g. sidewall rubber component) has a surface with suitable building tack for building said uncured rubber component, for example the tire sidewall rubber component, into an assembly of uncured rubber tire components.

In further accordance with this invention an assembly of uncured rubber tire components is provided wherein said uncured tire component (e.g. tire sidewall rubber component) is adhered to at least one other uncured tire rubber component by surface tack provided by said alkylphenol/acetylene tackifying resin on the surface of said uncured tire rubber component. Preferably, at least one of said components such as said tire sidewall rubber component contains said alkylphenol/acetylene tackifier resin on its interfacial surface.

A cured rubber tire is provided by curing, preferably sulfur curing, said assembly of uncured rubber components, wherein at least one of said rubber components contains said alkylphenol/acetylene tackifying resin on its interfacial surface (surface between said rubber component and at least one other rubber component of the tire) in a suitable mold to form a cured rubber tire.

A cured rubber tire is provided in a form of a cured assembly, preferably sulfur cured assembly, of said uncured tire components (e.g. tire rubber sidewall, particularly where at least one of said components is a tire rubber sidewall component having said alkylphenol/acetylene tackifying resin on its interfacial surface).

Accordingly, a cured rubber tire is provided having a cured rubber sidewall component comprising the rubber composition of this invention with an alkylphenol/acetylene tackifying resin on its interfacial surface between said sidewall component and another tire rubber component.

A significant aspect of the invention is the inclusion of the alkylphenol/acetylene tackifying resin, particularly the para tertiary butylphenol/acetylene resin, within and on a surface of the aforesaid rubber composition, particularly the tire sidewall component composed of said rubber composition, to promote building tack for the uncured rubber surface.

This is considered herein to be significant in a sense of being able to promote, or provide, surface building tack for the uncured rubber component during the building of the rubber component into an assembly of tire rubber components prior to the curing step for the tire assembly.

For the reinforcing filler, the silica (e.g. precipitated silica), if used, may be used to the exclusion of, or optionally, and if desired, used in conjunction with a silica coupler to couple the silica to the elastomer(s), to thus enhance its effect as reinforcement for the elastomer composition. Use of silica couplers for such purpose are well known and typically have a moiety reactive with hydroxyl groups (e.g. silanol groups) on the silica and another moiety interactive with the elastomer(s) to create the silica-to-rubber coupling effect.

As hereinbefore mentioned, a coupling agent may, if desired, be utilized with the silica to aid in its reinforcement of the rubber composition which contains the silica. Such coupling agent conventionally contains a moiety reactive with hydroxyl groups on the silica (e.g. precipitated silica) and another and different moiety interactive with the diene hydrocarbon based elastomer.

In practice, said coupling agent for said optional silica reinforcement, if used, may be, for example,
(A) a bis-(3-triakloxysilylalkyl) polysulfide such as, for example, a bis-(3-triethoxysilylpropyl) polysulfide, having an average of from 2 to 4 and more preferably an average of from 2 to 2.6 or from 3.4 to 4, connecting sulfur atoms in its polysulfidic bridge, or
(B) a bis-(3-triethoxysilylpropyl) polysulfide having an average of from 2 to 2.6 connecting sulfur atoms in its polysulfidic bridge or a bis-(3-triethoxysilylpropyl) polysulfide having an average of from 3.4 to 4 connecting sulfur atoms in its polysulfidic bridge, wherein said polysulfide having an average of from 2 to 2.6 connecting sulfur atoms in its polysulfidic bridge (to the exclusion of such polysulfide having an average of from 3 to 4 connecting sulfur atoms in its polysulfidic bridge) is blended with said rubber composition in the absence of sulfur and sulfur vulcanization accelerator and wherein said polysulfide having an average of from 3.4 to 4 connecting sulfur atoms in its polysulfidic bridge is thereafter blended with said rubber composition in the presence of sulfur and at least one sulfur vulcanization accelerator, or
(C) an organoalkoxymercaptosilane composition of the general Formula (I) represented as:

   (I) (X)ₙ(R₇O)₃₋ₙ-Si-R₈-SH

   wherein X is a radical selected from a halogen, namely chlorine or bromine and preferably a chlorine radical, and from alkyl radicals having from one to 16, preferably from one through 4, carbon atoms, preferably selected from methyl, ethyl, propyl (e.g. n-propyl) and butyl (e.g. n-butyl) radicals; wherein R₇ is an alkyl radical having from 1 through 18, alternately 1 through 4, carbon atoms preferably selected from methyl and ethyl radicals and more preferably an ethyl radical; wherein R₈ is an alkylene radical having from one to 16, preferably from one through 4, carbon atoms, preferably a propylene radical; and n is an average value of from zero through 3, preferably zero, and wherein, in such cases where n is zero or 1, R₇ may be the same or different for each (R₇O) moiety in the composition, and
(D) said organolkoxyomercaptosilane of the general Formula (I) capped with a moiety which uncaps the organoalkoxymercaptosilane upon heating to an elevated temperature.

Representative examples of various organoalkoxymercaptosilanes are, for example, triethoxy mercaptopropyl silane, trimethoxy mercaptopropyl silane, methyl dimethoxy mercaptopropyl silane, methyl diethoxy mercaptopropyl silane, dimethyl methoxy mercaptopropyl silane, triethoxy mercaptoethyl silane, tripropoxy mercaptopropyl silane, ethoxy dimethoxy mercaptopropylsilane, ethoxy diisopropoxy mercaptopropylsilane, ethoxy didodecyloxy mercaptopropylsilane and ethoxy dihexadecyloxy mercaptopropylsilane.

Such organoalkoxymercaptosilanes may be capped with various moieties as discussed above.

A representative example of a capped organoalkoxymercaptosilane coupling agent useful for this invention is a liquid 3-octanoylthio-1-propyltriethoxysilane as an NXT™ Silane from Momentive Performance Materials, formerly GE Silicones, as well as organomercaptosilane oligomers from Momentive Performance Materials.

The coupling agent may, for example, be added directly to the elastomer mixture or may be added as a composite of precipitated silica and such coupling agent formed by treating a precipitated silica therewith or by treating a colloidal silica therewith and precipitating the resulting composite.

For example, said optional silica (e.g. precipitated silica), or at least a portion of said optional silica, may be pre-treated prior to addition to said elastomer(s):
(A) with an alkylsilane of the general Formula (II), or
(B) with said bis(3-triethoxysilylpropyl) polysulfide having an average of from 2 to 4 connecting sulfur atoms in its polysulfidic bridge, or
(C) with an organomercaptosilane such as, for example, said organomercaptosilane of the general Formula (I), or
(D) with a combination of said alkylsilane of general Formula (I) and said bis(3-triethoxysilylpropyl) polysulfide having an average of from 2 to 4 connecting sulfur atoms in its polysulfidic bridge, or
(E) with a combination of said alkylsilane of general Formula (II) and said organomercaptosilane;
   wherein said alkylsilane of the general Formula (I) is represented as:

   (II)Xₙ-Si-R₆₍₄₋ₙ₎

   wherein R₆ is an alkyl radical having from 1 to 18 carbon atoms, preferably from 1 through 4 carbon atoms; n is a value of from 1 through 3; X is a radical selected from the group consisting of halogens, preferably chlorine, and alkoxy groups selected from methoxy and ethoxy groups, preferably an ethoxy group.

A significant consideration for said pre-treatment of said silica is to reduce, or eliminate, evolution of alcohol in situ within the rubber composition during the mixing of the silica with said elastomer such as may be caused, for example, by reaction such coupling agent contained within the elastomer composition with hydroxyl groups (e.g. silanol groups) contained on the surface of the silica.

Representative of additional synthetic diene based elastomers for said tire sidewall rubber composition are, for example, synthetic cis 1,4-polyisoprene rubber and solution polymerization prepared styrene/butadiene copolymer rubber (S-SBR).

It is readily understood by those having skill in the art that the rubber compositions would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, the aforesaid optional silica, and plasticizers, fillers, pigments, fatty acid, zinc oxide, microcrystalline waxes, antioxidants and antiozonants, peptizing agents and carbon black reinforcing filler. As known to those skilled in the art, depending on the intended use of the sulfur vulcanizable and sulfur-vulcanized material (rubbers), the additives mentioned above are selected and commonly used in conventional amounts.

The vulcanization is preferably conducted in the presence of a sulfur-vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur-vulcanizing agent is elemental sulfur.

Accelerators are used to control the time and/or temperature required for vulcanization and to improve the properties of the vulcanizate. In one embodiment, a single accelerator system may be used, i.e., primary accelerator. In another embodiment, combinations of two or more accelerators in which the primary accelerator is generally used in the larger amount, and a secondary accelerator which is generally used in smaller amounts in order to activate and to improve the properties of the vulcanizate. Combinations of these accelerators have been known to produce a synergistic effect on the final properties and are somewhat better than those produced by use of either accelerator alone. In addition, delayed action accelerators may be used which are not affected by normal processing temperatures but produce satisfactory cures at ordinary vulcanization temperatures. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The tire can be built, shaped, molded and cured by various methods which will be readily apparent to those having skill in such art.

The invention may be better understood by reference to the following example in which the parts and percentages are by weight unless otherwise indicated.

### EXAMPLE I

Experiments were conducted to evaluate the feasibility of providing a rubber composition with elastomers composed of emulsion SBR (E-SBR) and cis 1,4-polybutadiene rubber, without including natural rubber (natural cis 1,4-polyisoprene rubber), together with various tackifying resins to promote building back for the uncured rubber composition.

Rubber Control Samples B through D were prepared comprised of the aforesaid E-SBR and cis 1,4-polybutadiene elastomers together with, individually, three different tackifying resins.

Rubber Control Sample A is a rubber composition containing elastomers composed of a significant amount of natural rubber (40 phr) together with a cis 1,4-polybutadiene rubber for which the rubber composition contains a relatively common alkylphenol/formaldehyde tackifying resin to provide building tack for the uncured rubber composition.

The rubber composition samples were prepared by mixing the elastomers(s) together with reinforcing fillers and other rubber compounding ingredients in a first non-productive mixing stage (NP) in an internal rubber mixer for 4 minutes to a temperature of 160°C. The resulting mixture is then mixed in a productive mixing stage (P) in an internal rubber mixer with sulfur curative for 2 minutes to a temperature of 115°C. The rubber composition is cooled to below 40°C between the non-productive mixing step and the productive mixing step.

The basic formulation for the rubber samples is presented in the following Table 1 expressed in parts by weight per 100 parts of rubber unless otherwise indicated.

**Table 1**

| | **Samples** | |
|---|---|---|
| | **Control** | **Control** |
| **First Non-Productive Mixing Step (Mixed to 160°C)** | **A** | **B-D** |
| Natural cis 1,4-polyisoprene rubber (TRS 20) | 40 | 0 |
| Cis 1,4-polybutadiene rubber¹ | 60 | 65 |
| E-SBR rubber² | 0 | 35 |
| Carbon black³ | 51 | 45 |
| Processing oil and wax | 14 | 14 |
| Fatty acid | 1 | 1 |
| Antioxidant and antiozonant⁵ | 4.5 | 4.5 |
| Tackifiers (Tackifiers X, Y or Z) | 4 | 4 |

| **Productive Mixing Step (Mixed to 115°C)** | | |
|---|---|---|
| Zinc oxide | 3 | 3 |
| Sulfur and accelerator(s)⁶ | 2.5 | 2.5 |

| | | |
|---|---|---|
| Tackifier X - octylphenol/formaldehyde resin as SP1068 from Schenectady Tackifier Y - vinyl monomer modified alkylphenol/formaldehyde resin as Elaztobond T-31 00 from SI Group Tackifier Z - para-tertiary butylphenol/acetylene resin as Koresin from BASF ¹As BUD1207™ from The Goodyear Tire & Rubber Company ²As PLF1502™ from The Goodyear Tire & Rubber Company ³N550, a rubber reinforcing carbon black ⁴Primarily stearic acid (at least 90 percent by weight stearic acid) ⁵Amine and quinoline types ⁶Sulfenamide and quanidine types | | |

The following Table 2 illustrates cure behavior and various physical properties of rubber compositions based upon the basic recipe of Table 1 and reported herein as a Control Sample A and Control Samples B through D . Where cured rubber samples are examined, such as for the stress-strain, hot rebound and hardness values, the rubber samples were cured for 12 minutes at a temperature of 170°C.

**Table 2**

| | **Control** | **Control** | **Control** | **Control** |
|---|---|---|---|---|
| **Samples (phr)** | **A** | **B** | **C** | **D** |
| Natural cis 1,4-polyisoprene rubber | 40 | 0 | 0 | 0 |
| Cis 1,4-polybutadiene rubber | 60 | 65 | 65 | 65 |
| E-SBR rubber | 0 | 35 | 35 | 35 |
| Tackifying resin X | 4 | 4 | 0 | 0 |
| Tackifying resin Y | 0 | 0 | 4 | 0 |
| Tackifying resin Z | 0 | 0 | 0 | 4 |

| **Rheometer**, **150°C** | | | | |
|---|---|---|---|---|
| Maximum torque, dNm | 10.6 | 10.6 | 10.5 | 11.2 |
| Minimum torque, dNm | 2.3 | 1.8 | 1.7 | 1.8 |
| Delta torque, dNm | 8.3 | 8.8 | 8.8 | 9.4 |
| T90, minutes | 11 | 11.4 | 11.2 | 10.5 |

| **Stress-strain¹** | | | | |
|---|---|---|---|---|
| Tensile strength (MPa) | 13.9 | 12 | 11.4 | 11.9 |
| Elongation at break (%) | 716 | 755 | 724 | 692 |
| 300% modulus (MPa) | 4.4 | 3.8 | 3.8 | 4.3 |

| **Rebound** | | | | |
|---|---|---|---|---|
| 23°C | 55 | 52 | 53 | 53 |
| 100°C | 59 | 56 | 56 | 57 |

| **Shore A hardness** | | | | |
|---|---|---|---|---|
| 23°C | 51 | 53 | 52 | 54 |
| 100°C | 45 | 46 | 46 | 48 |
| Tear Strength, N, 95°C | 157 | 187 | 154 | 139 |

| **Tack Strength, N, of Uncured Rubber Samples²** | | | | |
|---|---|---|---|---|
| Original | 8.4 | 0.7 | 1.5 | 0.9 |
| Aged 5 days at 23°C in air | 8.1 | 0.5 | 0.8 | 0.4 |

| **Static Ozone Test Observations of Cured Rubber Samples, Ozone 50 pphm, 48 hours, 40°C, Variable Strain** | | | | |
|---|---|---|---|---|
| Number of cracks | B | 0 | 0 | 0 |
| Size of cracks | 2 | N/A | N/A | N/A |

| **Dynamic ozone test observations of cured rubber Samples, Ozone 50 pphm, 48 hours, 40°C, 60% Strain** | | | | |
|---|---|---|---|---|
| Number of cracks | D | D | D | D |
| Size of cracks | 2 | 2 | 2 | 2 |

The following is the key used to report visual observations of the cracks, if any, on the surface of a respective Sample.

| **Number of Cracks** | **Size of Cracks** |
|---|---|
| O = None | 1 = small (hairline) |
| A = less than 1/4 of the surface | 2 = medium |
| B = 1/4 to 1/2 of the surface | 3 = large |
| C = 1/2 to 3/4 of the surface | 4 = severe (open) |
| D = 3/4 to all of the surface | |

| | |
|---|---|
| ¹Data according to Automated Testing System instrument by the Instron Corporation which incorporates six tests in one system. Such instrument may determine ultimate tensile, ultimate elongation, modulii, etc. Data reported in the Table is generated by running the ring tensile test station which is an Instron 4201 load frame. ²According to a positive pressure tack test for interfacial tack between two uncured rubber samples by pulling apart two uncured rubber samples at ambient room temperature (e.g. 23°C) which had been pressed together with a pressure of 0.2 MPa (30 psi) for 30 seconds following which the pressure is released. The force to pull the samples apart is measured in terms of Newtons (N) force. | |

It can be seen from Table 2 that both the original and aged surface tack strength for all of Samples B, C and D (without the natural rubber) were extremely low (ranging from 0.4 to 1.5 Newtons) as compared to the Control Sample A (ranging from 8.1 to 8.4 Newtons) which contained 40 phr of natural rubber and cis 1,4-polybutadiene rubber. The surface tack strength (building tack) for Samples B through D is considered herein to be unacceptably low for tire components to be used to build an assembly of rubber components for a tire.

Accordingly, it is concluded by this Example, that the rubber Control Samples which contained no natural rubber, together with the inclusion of the E-SBR and tackifying resins X, Y or Z, were inappropriate to provide sufficient original and aged tack for the uncured rubber Control Samples.

### EXAMPLE II

Experiments were conducted to evaluate use of adding back a low level of 10 phr (as compared to 40 phr) of natural rubber and 20 phr of E-SBR together with tackifying resins X, Y or M (a piperylene hydrocarbon based tackifying resin) for providing rubber Samples with surface building tack (tack strength).

Rubber Control Sample E was similar to rubber Control Rubber Sample A of Example I which contained 40 phr of natural rubber and tackifying resin X as the alkylphenol/formaldehyde tackifying resin without the E-SBR rubber.

Rubber Control Samples F, G and H contained 10 phr of natural rubber and E-SBR to replace a portion of the natural rubber together with the various tackifying resins X, Y or M (the piperylene-based hydrocarbon resin).

The rubber Control Samples were prepared in the manner of Example I.

The basic formulation for the rubber samples is presented in the following Table 3 expressed in parts by weight per 100 parts of rubber unless otherwise indicated.

**Table 3**

| | **Control** | **Control** | **Control** | **Control** |
|---|---|---|---|---|
| | **E** | **F** | **G** | **H** |
| **Non-Productive Mixing (4 minutes to 150°C)** | | | | |
| Natural cis 1,4-polyisoprene rubber | 40 | 10 | 10 | 10 |
| Cis 1,4-polybutadiene rubber | 60 | 70 | 70 | 70 |
| E-SBR rubber | 0 | 20 | 20 | 20 |
| Carbon black | 51 | 45 | 45 | 45 |
| Antoxidants/Antiozonants | 5 | 5 | 5 | 5 |
| Processing oil and wax | 15 | 15 | 15 | 15 |
| Tackifying resin X | 3.5 | 3.5 | 0 | 0 |
| Tackifying resin Y | 0 | 0 | 0 | 3.5 |
| Tackifying resin M¹ | 0 | 0 | 3.5 | 0 |

| **Productive Mixing (mixed to 115°C)** | | | | |
|---|---|---|---|---|
| Zinc oxide | 3 | 3 | 3 | 3 |
| Sulfur and accelerators | 2.5 | 2.5 | 2.5 | 2.5 |

| | | | | |
|---|---|---|---|---|
| ¹Hydrocarbon resin based on piperylene as Piccotac™ 1100 resin from Eastman Chemical Company | | | | |

The following Table 4 illustrates cure behavior and various physical properties of rubber compositions based upon the basic recipe of Table 3 and reported herein for rubber Samples E through H.

**Table 4**

| | **Control** | **Control** | **Control** | **Control** |
|---|---|---|---|---|
| **Samples** | **E** | **F** | **G** | **H** |
| Natural cis 1,4-polyisoprene rubber | 40 | 10 | 10 | 10 |
| Cis 1,4-polybutadiene rubber | 60 | 70 | 70 | 70 |
| E-SBR rubber | 0 | 20 | 20 | 20 |
| Tackifying resin X | 3.5 | 3.5 | 0 | 0 |
| Tackifying resin Y | 0 | 0 | 0 | 3.5 |
| Tackifying resin M¹ | 0 | 0 | 3.5 | 0 |

| **Rheomoter, 150°C** | | | | |
|---|---|---|---|---|
| Maximum torque, dNm | 10.4 | 10.3 | 11.4 | 10.4 |
| Minimum torque, dNm | 2.5 | 1.8 | 1.9 | 1.7 |
| Delta torque, dNm | 7.9 | 8.5 | 9.5 | 8.7 |
| T90, minutes | 11.0 | 8.5 | 7.8 | 8.7 |

| **Stress-strain²** | | | | |
|---|---|---|---|---|
| Tensile strength (MPa) | 13.9 | 11.6 | 11.2 | 11.8 |
| Elongation at break (%) | 710 | 698 | 624 | 705 |
| 300% modulus (MPa) | 4.2 | 3.8 | 4.3 | 3.7 |

| **Rebound** | | | | |
|---|---|---|---|---|
| 23°C | 54 | 55 | 57 | 55 |
| 100°C | 57 | 58 | 61 | 58 |

| **Shore A hardness** | | | | |
|---|---|---|---|---|
| 23°C | 49 | 50 | 51 | 50 |
| 100°C | 45 | 45 | 47 | 45 |
| Tear Strength, N, 95°C | 172 | 133 | 109 | 152 |

| **Tack Strength, N, of Uncured Rubber Samples** | | | | |
|---|---|---|---|---|
| Original | 7.8 | 1.2 | 1.5 | 2.8 |
| Aged 5 days at 23°C in air | 13.5 | 0.8 | 2.1 | 1.7 |

| **Static Ozone Test Observations of Cured Rubber Samples, Ozone 50 pphm, 48 hours, 40°C. Variable Strain** | | | | |
|---|---|---|---|---|
| Number of cracks | B | 0 | C | 0 |
| Size of cracks | 1 | 0 | 2 | 0 |

| **Dynamic ozone test observations of cured rubber Samples, Ozone 50 pphm, 48 hours, 40°C. 60% Strain** | | | | |
|---|---|---|---|---|
| Number of cracks | D | D | D | D |
| Size of cracks | 2 | 2 | 2 | 2 |

From Table 4 it can be seen that the surface tack strength (building tack) for the rubber Control Samples F, G and H (ranging from 0.8 to 2.8 Newtons) containing 10 phr of natural rubber with an additional inclusion of the E-SBR with any of tackifying resins X, Y or M was extremely reduced as compared to the tack strength for rubber Control Sample E (ranging from 7.8 to 13.5 Newtons) which contained 40 phr of natural rubber without the E-SBR and contained tackifier resin X, an alkylphenol/formaldehyde tackifying resin.

Accordingly, it is concluded that a level of 10 phr of natural rubber together with the inclusion of the E-SBR with any of tackifying resins X, Y and M would be inappropriate for providing an uncured tire component (e.g. tire sidewall component) with sufficient building tack for building an assembly of rubber components for a tire.

### EXAMPLE III

Experiments were conducted to further evaluate use of a low level of 10 phr (as compared to 40 phr) of natural rubber, together with 20 phr of E-SBR and tackifying resins X, Y and Z (an alkylphenol/acetylene tackifying resin) for providing rubber Samples with surface building tack (tack strength).

Rubber Control Sample I was similar to rubber Control Sample A of Example I which contained 40 phr of natural rubber and tackifying resin X as the alkylphenol/formaldehyde tackifying resin without the E-SBR rubber.

Rubber Control Samples J and K and rubber Sample L contained 10 phr of natural rubber and 20 phr of E-SBR to replace a portion of the natural rubber together with the various tackifying resins X, Y or Z (the alkylphenol/acetylene tackifying resin).

The rubber samples were prepared in the manner of Example I.

The basic formulation for the rubber samples is presented in the following Table 3 expressed in parts by weight per 100 parts of rubber unless otherwise indicated.

The rubber samples were prepared in the manner of Example I.

The basic formulation for the rubber samples is presented in the following Table 5 expressed in parts by weight per 100 parts of rubber unless otherwise indicated.

**Table 5**

| | **Control** | **Control** | **Control** | |
|---|---|---|---|---|
| | **I** | **J** | **K** | **L** |
| **Non-Productive Mixing (4 minutes to 150°C)** | | | | |
| Natural cis 1,4-polyisoprene rubber | 40 | 10 | 10 | 10 |
| Cis 1,4-polybutadiene rubber | 60 | 70 | 70 | 70 |
| E-SBR rubber | 0 | 20 | 20 | 20 |
| Carbon black | 51 | 45 | 45 | 45 |
| Antoxidants/Antiozonants | 4.5 | 4.5 | 4.5 | 4.5 |
| Processing oil and wax | 14 | 14 | 14 | 14 |
| Tackifying resin X | 3.5 | 4 | 0 | 4 |
| Tackifying resin Y | 0 | 0 | 4 | 0 |
| Tackifying resin Z | 0 | 0 | 0 | 4 |

| **Productive Mixing (mixed to 115°C)** | | | | |
|---|---|---|---|---|
| Zinc oxide | 3 | 3 | 3 | 3 |
| Sulfur and accelerators | 2.5 | 2.5 | 2.5 | 2.5 |

The following Table 6 illustrates cure behavior and various physical properties of rubber compositions based upon the basic recipe of Table 5 and reported herein for rubber Control Samples I through K and rubber Sample L.

**Table 6**

| | **Control** | **Control** | **Control** | |
|---|---|---|---|---|
| **Samples** | **I** | **J** | **K** | **L** |
| Natural cis 1,4-polyisoprene rubber | 40 | 10 | 10 | 10 |
| Cis 1,4-polybutadiene rubber | 60 | 70 | 70 | 70 |
| E-SBR rubber | 0 | 20 | 20 | 20 |
| Tackifying resin X | 3.5 | 4 | 0 | 0 |
| Tackifying resin Y | 0 | 0 | 4 | 0 |
| Tackifying resin Z | 0 | 0 | 0 | 4 |

| **Rheomoter, 150°C** | | | | |
|---|---|---|---|---|
| Maximum torque, dNm | 11.0 | 10.8 | 12.2 | 12.3 |
| Minimum torque, dNm | 2.7 | 2.2 | 2.3 | 2.2 |
| Delta torque, dNm | 8.3 | 8.6 | 9.9 | 10.1 |
| T90, minutes | 10.6 | 8.8 | 8.2 | 8.0 |

| **Stress-strain²** | | | | |
|---|---|---|---|---|
| Tensile strength (MPa) | 13.8 | 13.1 | 13.3 | 13.3 |
| Elongation at break (%) | 720 | 761 | 708 | 700 |
| 300% modulus (MPa) | 4.1 | 3.9 | 4.4 | 4.3 |

| **Rebound** | | | | |
|---|---|---|---|---|
| 23°C | 54 | 55 | 57 | 55 |
| 100°C | 57 | 58 | 61 | 60 |

| **Shore A hardness** | | | | |
|---|---|---|---|---|
| 23°C | 50 | 52 | 54 | 54 |
| 100°C | 45 | 47 | 49 | 49 |
| Tear Strength, N, 95°C | 195 | 191 | 177 | 154 |

| **Tack Strength, N, of Uncured Rubber Samples** | | | | |
|---|---|---|---|---|
| Original | 7.9 | 3.0 | 5.6 | 5.2 |
| Aged 5 days at 23°C in air | 11.2 | 2.7 | 3.1 | 5.7 |
| Aged 10 days in 23°C in air | 12.8 | 0.7 | 0.8 | 7.9 |

| **Static Ozone Test Observations of Cured Rubber Samples, Ozone 50 pphm, 48 hours, 40°C, Variable Strain** | | | | |
|---|---|---|---|---|
| Number of cracks | 0 | 0 | 0 | 0 |
| Size of cracks | N/A | N/A | N/A | N/A |

| **Dynamic ozone test observations of cured rubber Samples, Ozone 50 pphm, 48 hours, 40°C. 60% Strain** | | | | |
|---|---|---|---|---|
| Number of cracks | D | D | C | C |
| Size of cracks | 3 | 3 | 2 | 2 |

From Table 6 it can be seen that the tack strength (surface building tack) for rubber Sample L (containing the alkylphenol/acetylene tackifying resin) was greatly improved over the tack strength of rubber Control Sample J (using tackifing resin X, namely the alkylphenol/formaldehyde resin) and rubber Control Sample K (using tackifying resin Y, namely the vinyl monomer modified alkylphenol/formaldehyde resin).

Moreover, the tack strength (5.2 to 7.9 Newtons) of rubber Sample L (tackifying resin Z) was sufficiently close to the tack strength (7.9 to 12.8 Newtons) of rubber Control Sample I that it is considered herein to be an appropriately useful building tack value.

Accordingly, it is concluded that a satisfactory building tack (surface tack strength) can be obtained for the rubber composition containing a relatively low level of 10 phr of natural rubber together with and E-SBR rubber and cis 1,4-polybutadiene rubber when using the alkylphenol/acetylene tackifying resin.

A composite including at least two uncured rubber components is assembled in which a first uncured rubber component is composed of the rubber composition of Sample L which contained the alkylphenol/acetylene tackifying resin within and on its surface. The other uncured rubber component(s) did not have the alkylphenol/acetylene tackifying resin on its surface, although one or more of the other uncured rubber components may have had an alkylphenol/formaldehyde resin on its surface. It was observed that the building tack of the said first rubber component provided by the alkylphenol/acetylene tackifying resin was an adequate surface building tack to successfully build the composite assembly.

Accordingly, the composite assembly, which can be a tire assembly in which the said first uncured rubber component is a tire sidewall rubber component, is provided with the alkylphenol/acetylene tackifying resin on an interfacial surface between said first rubber component (e.g. the sidewall rubber component) and another uncured rubber component (e.g. another tire rubber component).

Upon curing the composite assembly (e.g. sulfur curing the assembly) a cured assembly (e.g. cured rubber tire) is provided with an alkylphenol/acetylene tackifying resin on an interfacial surface between said first rubber component (e.g. tire sidewall component) and another tire rubber component.

## Claims

1. An uncured rubber composition comprising, based upon parts by weight per 100 parts by weight rubber (phr):
(A) 100 phr of diene-based elastomers comprising:
(1) from 5 to 15 phr of cis 1,4-polyisoprene rubber comprising at least one of natural and synthetic cis 1,4-polyisoprene rubber,
(2) from 55 to 75 phr of cis 1,4-polybutadiene rubber,
(3) from 10 to 30 phr of emulsion polymerization prepared styrene/butadiene rubber (E-SBR);
(B) from 3 to 10 phr of alkylphenol/acetylene tackifying resin; and
(C) from 20 to 120 phr of a particulate reinforcing filler comprising:
(1) rubber reinforcing carbon back, or
(2) 10 to 80 phr of rubber reinforcing carbon black, and up to 50 phr of silica;
wherein at least one surface of said rubber composition contains said alkyphenol/acetylene tackifying resin.

2. The rubber composition of claim 1 wherein said cis 1,4-polyisoprene rubber is natural rubber.

3. The rubber composition of claim 1 or 2 wherein said alkylphenol/acetylene tackifying resin comprises a para tertiary butylphenol/acetylene tackifying resin.

4. The rubber composition of claim 1 wherein said reinforcing filler comprises 10 to 80 phr of rubber reinforcing carbon black and from 10 to 50 phr of precipitated silica.

5. The rubber composition of at least one of the previous claims further comprising a silica coupler for said precipitated silica wherein said silica coupler has a moiety reactive with hydroxyl groups on said silica and another different moiety interactive with said diene-based elastomer(s).

6. The rubber composition of at least one of the previous claims which further contains an alkylphenol/formaldehyde tackifying resin.

7. The rubber composition of claim 9 wherein said alkylphenol/formaldehyde tackifying resin comprises at least one of para tertiary octylphenol/formaldehyde tackifying resin and para tertiary butylphenol/formaldehyde tackifying resin.

8. The rubber composition of at least one of the previous claims in a form of an uncured tire rubber component wherein at least one surface of said uncured tire rubber component contains said alkylphenol/acetylene tackifying resin on its surface.

9. The rubber composition of claim 8 in a form of a tire sidewall rubber component.

10. An assembly of uncured rubber tire components wherein one of said uncured tire components comprises the uncured rubber composition of at least one of the previous claims 1-8 and wherein said uncured tire component has a surface building tack provided by said alkylphenol/acetylene tackifying resin on its interfacial surface.

11. The assembly of claim 10 wherein the uncured tire component is an uncured tire sidewall rubber component.

12. A cured rubber composition made by curing the uncured rubber composition of at least one of the claims 1 to 9 and having said alkylphenol/acetylene tackifying resin on its surface.

13. A cured tire comprising a cured rubber composition made by curing the uncured rubber composition of at least one of the claims 1-9.

14. The cure tire according to claim 13 having an alkylphenol/acetylene tackifying resin on an interfacial surface between a tire sidewall rubber component and another tire rubber component.

15. A cured assembly made by curing the uncured assembly of claim 10 or 11.

## Patentansprüche

1. Unvulkanisierte Kautschukzusammensetzung, umfassend, auf Basis von Gewichtsteilen je 100 Gewichtsteile Kautschuk (ThK):
(A) 100 ThK dienbasierte Elastomere, umfassend:
(1) 5 bis 15 ThK cis-1,4-Polyisoprenkautschuk, umfassend mindestens einen von natürlichem und synthetischem cis-1,4-Polyisoprenkautschuk,
(2) 55 bis 75 ThK cis-1,4-Polybutadienkautschuk,
(3) 10 bis 30 ThK von durch Emulsionspolymerisation hergestelltem Styrol-Butadien-Kautschuk (E-SBR);
(B) 3 bis 10 ThK klebrigmachendes Alkylphenol-Acetylen-Harz; und
(C) 20 bis 120 ThK eines partikelförmigen Verstärkungsfüllstoffs, umfassend:
(1) Kautschukverstärkungs-Carbon Black, oder
(2) 10 bis 80 ThK Kautschukverstärkungs-Carbon Black, und bis zu 50 ThK Silika;
wobei mindestens eine Oberfläche der Kautschukzusammensetzung das klebrigmachende Alkylphenol-Acetylen-Harz enthält.

2. Kautschukzusammensetzung nach Anspruch 1, wobei der cis-1,4-Polyisoprenkautschuk Naturkautschuk ist.

3. Kautschukzusammensetzung nach Anspruch 1 oder 2, wobei das klebrigmachende Alkylphenol-Acetylen-Harz ein klebrigmachendes para-tertiäres Butylphenol-Acetylen-Harz umfasst.

4. Kautschukzusammensetzung nach Anspruch 1, wobei der Verstärkungsfüllstoff 10 bis 80 ThK Kautschukverstärkungs-Carbon Black und 10 bis 50 ThK ausgefälltes Silika umfasst.

5. Kautschukzusammensetzung nach mindestens einem der vorgenannten Ansprüche, weiter einen Silika-Haftvermittler für das ausgefällte Silika umfassend, wobei der Silika-Haftvermittler einen Anteil, der mit Hydroxylgruppen an dem Silika reaktiv ist, und einen anderen verschiedenen Anteil, der mit dem bzw. den dienbasierten Elastomer(en) in Wechselwirkung tritt, aufweist.

6. Kautschukzusammensetzung nach mindestens einem der vorgenannten Ansprüche, die weiter ein klebrigmachendes Alkylphenol-Formaldehyd-Harz enthält.

7. Kautschukzusammensetzung nach Anspruch 9, wobei das klebrigmachende Alkylphenol-Formaldehyd-Harz mindestens eines von klebrigmachendem para-tertiärem Octylphenol-Formaldehyd-Harz und klebrigmachendem para-tertiärem Butylphenol-Formaldehyd-Harz umfasst.

8. Kautschukzusammensetzung nach mindestens einem der vorgenannten Ansprüche, in einer Form eines unvulkanisierten Reifen-Kautschukbauteils, wobei mindestens eine Oberfläche des unvulkanisierten Reifen-Kautschukbauteils das klebrigmachende Alkylphenol-Acetylen-Harz an seiner Oberfläche enthält.

9. Kautschukzusammensetzung nach Anspruch 8 in einer Form eines Reifenseitenwand-Kautschukbauteils.

10. Anordnung aus unvulkanisierten Kautschuk-Reifenbauteilen, wobei eines der unvulkanisierten Reifenbauteile die unvulkanisierte Kautschukzusammensetzung nach mindestens einem der vorgenannten Ansprüche 1-8 umfasst und wobei das unvulkanisierte Reifenbauteil eine Oberflächen-Konfektionsklebrigkeit aufweist, die von dem klebrigmachenden Alkylphenol-Acetylen-Harz an seiner Grenzfläche bereitgestellt wird.

11. Anordnung nach Anspruch 10, wobei das unvulkanisierte Reifenbauteil ein unvulkanisiertes Reifenseitenwand-Kautschukbauteil ist.

12. Vulkanisierte Kautschukzusammensetzung, die durch Vulkanisieren der unvulkanisierten Kautschukzusammensetzung nach mindestens einem der Ansprüche 1 bis 9 hergestellt ist und das klebrigmachende AlkylphenolAcetylenharz an ihrer Oberfläche aufweist.

13. Vulkanisierter Reifen, umfassend eine vulkanisierte Kautschukzusammensetzung, die durch Vulkanisieren der unvulkanisierten Kautschukzusammensetzung nach mindestens einem der Ansprüche 1-9 hergestellt wurde.

14. Vulkanisierter Reifen nach Anspruch 13, der ein klebrigmachendes Alkylphenol-Acetylen-Harz an einer Grenzfläche zwischen einem Reifenseitenwand-Kautschukbauteil und einem anderen Reifen-Kautschukbauteil aufweist.

15. Vulkanisierte Anordnung, hergestellt durch Vulkanisieren der unvulkanisierten Anordnung von Anspruch 10 oder 11.

## Revendications

1. Composition de caoutchouc non vulcanisé comprenant, en se basant sur des parties en poids par 100 parties en poids de caoutchouc (phr) :
(A) à concurrence de 100 phr, des élastomères à base diénique, comprenant :
(1) à concurrence de 5 à 15 phr, un caoutchouc de cis 1,4-polyisoprène comprenant au moins un membre choisi parmi le groupe comprenant le caoutchouc naturel et du caoutchouc synthétique de cis 1,4-polyisoprène ;
(2) à concurrence de 55 à 75 phr, du caoutchouc de cis 1,4-polybutadiène ;
(3) à concurrence de 10 à 30 phr, un caoutchouc de styrène/butadiène préparé par polymérisation en émulsion (E-SBR) ;
(B) à concurrence de 3 à 10 phr, une résine donnant du collant à base d'alkylphénol/acétylène ; et
(C) à concurrence de 20 à 120 phr, une matière de charge particulaire pour le renforcement, comprenant :
(1) du noir de carbone pour le renforcement du caoutchouc ; ou
(2) à concurrence de 10 à 80 phr, du noir de carbone pour le renforcement du caoutchouc, et de la silice jusqu'à concurrence de 50 phr ;
au moins une surface de ladite composition de caoutchouc comprenant ladite résine donnant du collant à base d'alkylphénol/acétylène.

2. Composition de caoutchouc selon la revendication 1, dans laquelle ledit caoutchouc de cis 1,4-polyisoprène est du caoutchouc naturel.

3. Composition de caoutchouc selon la revendication 1 ou 2, dans lequel ladite résine donnant du collant à base d'alkylphénol/acétylène comprend une résine donnant du collant à base de para-tert-butylphénol/acétylène.

4. Composition de caoutchouc selon la revendication 1, dans laquelle ladite matière de charge pour le renforcement comprend, à concurrence de 10 à 80 phr, du noir de carbone pour le renforcement du caoutchouc et, à concurrence de 10 à 50 phr, de la silice précipitée.

5. Composition de caoutchouc selon au moins une des revendications précédentes, comprenant en outre un coupleur de silice pour ladite silice précipitée, ledit coupleur de silice possédant une fraction apte à réagir avec des groupes hydroxyle sur ladite silice et une autre fraction différente qui entre en interaction avec lesdits élastomères à base diénique.

6. Composition de caoutchouc selon au moins une des revendications précédentes, qui contient en outre une résine donnant du collant à base d'alkylphénol/- formaldéhyde.

7. Composition de caoutchouc selon la revendication 9, dans laquelle ladite résine donnant du colorant à base d'alkylphénol/formaldéhyde comprend au moins un membre choisi parmi le groupe comprenant une résine donnant du collant à base de la tert-octylphénol/formaldéhyde et une résine donnant du collant à base de tert-butylphénol/formaldéhyde.

8. Composition de caoutchouc selon au moins une des revendications précédentes, sous la forme d'un composant de caoutchouc de bandage pneumatique non vulcanisé, dans laquelle au moins une surface dudit composant de caoutchouc de bandage pneumatique non vulcanisé contient ladite résine donnant du collant à base d'alkylphénol/acétylène, sur sa surface.

9. Composition de caoutchouc selon la revendication 8, sous la forme d'un composant de caoutchouc de flanc de bandage pneumatique.

10. Assemblage de composants de bandage pneumatique en caoutchouc non vulcanisé, dans lequel un desdits composants de bandage pneumatique non vulcanisés comprend la composition de caoutchouc non vulcanisé selon au moins une des revendications précédentes 1 à 8, et dans lequel ledit composant de bandage pneumatique non vulcanisé possède une surface conférant du collant fourni par ladite résine donnant du collant à base d'alkylphénol/acétylène, sur sa surface d'interface.

11. Assemblage selon la revendication 10, dans lequel le composant de bandage pneumatique non vulcanisé est un composant de caoutchouc de flanc de bandage pneumatique non vulcanisé.

12. Composition de caoutchouc vulcanisé que l'on obtient par vulcanisation de la composition de caoutchouc non vulcanisé selon au moins une des revendications 1 à 9, et possédant ladite résine donnant du collant à base d'alkylphénol/acétylène, sur sa surface.

13. Bandage pneumatique vulcanisé comprenant une composition de caoutchouc vulcanisé que l'on obtient par vulcanisation de la composition de caoutchouc non vulcanisé selon au moins une des revendications 1 à 9.

14. Bandage pneumatique vulcanisé selon la revendication 13, possédant une résine donnant du collant à base d'alkylphénol/acétylène sur une surface à l'interface entre un composant de caoutchouc de flanc de bandage pneumatique et un autre composant de caoutchouc de bandage pneumatique.

15. Assemblage vulcanisé que l'on obtient par vulcanisation de l'assemblage non vulcanisé selon la revendication 10 ou 11.
